# EUROPÄISCHE PATENTSCHRIFT

(11) **EP 1 500 695 B1**
(45) Veröffentlichungstag und Bekanntmachung des Hinweises auf die Patenterteilung: **24.02.2010**
(21) Anmeldenummer: 04017478.1
(22) Anmeldetag: 23.07.2004
(51) Int. Cl.: C11B 3/00, C11B 1/04, C11B 1/06, A23D 9/00

(54) **Verwendung eines Verfahrens zur Aufbereitung von glycosidhaltigen Pflanzenölen, um genießbare und lagerfähige Pflanzenöle zu bereiten.**
Use of a method for processing glycoside-containing vegetable oils to get edible and storable vegetable oils.
Utilisage d'un procédé de traitement d'huiles végétales contenant des glycosides pour obtenir d'huiles végétales mangeable et stockables.

(30) Priorität: 24.07.2003 DE 10333858
(43) Veröffentlichungstag der Anmeldung: 26.01.2005
(73) Patentinhaber: Jackeschky, Hans-Joachim, 22941 Hammoor (DE)
(72) Erfinder: Jackeschky, Hans-Joachim, 22941 Hammoor (DE)
(74) Vertreter: Emmel, Thomas

(56) Entgegenhaltungen:
- EP-A- 0 312 855
- WO-A-92/01391
- WO-A-96/22027
- GB-A- 2 371 545
- US-A- 4 486 353
- DATABASE WPI Section Ch, Week 198737 Derwent Publications Ltd., London, GB; Class D23, AN 1987-260181 XP002039741 -& JP 62 179598 A (NIPPON OILS & FATS CO LTD) 6. August 1987 (1987-08-06)
- DATABASE WPI Section Ch, Week 198419 Derwent Publications Ltd., London, GB; Class D13, AN 1984-117388 XP002303472 -& JP 59 055149 A (AJINOMOTO KK) 30. März 1984 (1984-03-30)

## Beschreibung

Die Erfindung die Verwendung betrifft eines Verfahrens zur Aufbereitung von gesundheitlich bedenkliche Stoffe enthaltenden Pflanzenölen.

Viele zur Ölherstellung geeignete Pflanzensaaten weisen in ihrer Samenkapsel bzw. in ihrer Vakuaole eine hohen Gehalt von potentiell toxischen Stoffen auf wie Cyanoglycosiden, Ketone usw. auf, die in vielen Fällen der Pflanze als Fraßschutz gegen Herbivoren dienen.

Bei der Ölherstellung durch Pressung oder andere geeignete Verfahren gelangen diese toxischen Stoffe auch ins Öl und können dort - z.B. bei den Glycosidischen Verbindungen durch Enzymeinwirkung - hydrolysiert werden. Im Fall von cyanogenen Glycosiden bilden sich dabei Cyanhydrine, die rasch in Blausäure und ihre entsprechenden Carbonylverbindungen zerfallen und so das Öl ungenießbar und mitunter sogar toxisch machen. Diese Reaktion wird zusätzlich durch die Anwesenheit von Luftsauerstoff, der sich bei der Ölpressung nur schwer vollständig ausschließen läßt, beschleunigt.

Gleichzeitig gelangen während der Ölgewinnung auch Enzyme aus der Samenkapsel ins Öl, so z.B. Glucosidasen, Lipasen und Oxidasen. Deren Aktivität begünstigt einerseits die bereits angesprochene Hydrolyse der im Öl enthaltenen Glycoside, führt andererseits aber auch zu einer Hydrolyse mancher Fette und damit zur Bildung von freien Fettsäuren, was wiederum dazu führt, daß das Öl ranzig und damit ebenfalls ungenießbar wird.

Dies gilt insbesondere für Flachsöl, das aufgrund des hohen Gehalts an ernährungsphysiologisch günstigen Omega-3-Fettsäure (Alva-Linolensäure) zwischen 50% und 80% von hohem Interesse für die menschliche Ernährung ist, jedoch aufgrund des Anteils an cyanogenen Glycosiden bereits innerhalb von 14 Tage nach der Pressung einen unangenehmen Geschmack ausbildet, der innerhalb von 4 bis 6 Wochen so stark ansteigt, daß das Öl praktisch ungenießbar wird und sich nur noch zu technischen Zwecken wie zum Beispiel zur Fimisherstellung eignet. Selbst bei kühler, dunkler und luftdichter Lagerung beträgt die Lagerfähigkeit von Flachsöl für den menschlichen Genuß nur maximal 6 Wochen. Auch das Verschneiden mit anderen Ölen mildert weder den unangenehmen Geschmack noch verlängert es die Lagerfähigkeit merklich, sondern führt - selbst bei einem geringen Anteil an Flachsöl - dazu, daß das erhaltene Gemisch ungenießbar wird.

Auch andere Ölsaaten können potentiell toxische Stoffe enthalten, die das daraus gewonnene Öl ungenießbar machen. Senfsaat enthält z.B. Thioglycoside, die bei der Pressung mit den zellmembrangebundenen Enzymen Thioglucosidase und Sulfatase in Kontakt kommen und zusammen in das aufgefangene Senföl gelangen. Durch die Enzymaktivität bildet sich dabei das toxische Isothiocyanat.

Als weiteres Beispiel kann das Perillaöl genannt werden, dass ebenfalls aufgrund des hohen Gehalts an ernährungsphysiologisch günstigen Omega-3-Fettsäure (Alva-Linolensäure) zwischen 50% und 60% von hohem Interesse für die menschliche Ernährung ist, aber gesundheitlich bedenkliche Ketonverbindungen enthält.

Die bei der Pressung erhaltenen Preßkuchen können ebenfalls einen hohen Anteil an potentiell toxischen Stoffen enthalten. Beispielsweise eignet sich der beim Pressen von Flachssaat erhaltene Preßkuchen trotz seiner ernährungsphysiologisch günstigen Zusammensetzung mit hohem Proteingehalt und gleichzeitig hohem Anteil an Omega-3-Fettsäuren aufgrund der enthaltenen Glycoside lediglich als Beimischung zum Tierfutter, und auch hier dürfen aufgrund der durch die Hydrolyse einsetzenden Toxizität nur geringe Dosen verfüttert werden.

Man könnte die Bildung der toxischen Substanzen vermeiden, in dem man die Saat vor oder während der Pressung erhitzt, so daß die in der Saat erhaltenen En, zyme denaturiert werden und die im Öl enthaltenen Glycoside so nicht mehr hydrolysieren können. Die Erhitzung würde jedoch zur Zerstörung vieler Vitalstoffe führen und damit den gesundheitlichen Wert der Öle beeinträchtigen. Insbesondere die gesundheitlich wertvollen mehrfach ungesättigten Fettsäuren werden bei hohen Temperaturen polymerisiert, d.h. in gesundheitlich minderwertige, zum Teil sogar toxische Fettsäuren umgewandelt. Dabei ist aber noch nicht einmal sichergestellt, dass nicht bei der Weiterverarbeitung wieder aktive Enzyme in das Produkt gelangen und damit im nachhinein die toxischen Stoffe freisetzen

Aus der RU 2199875 ist ein Extraktionsverfahren für Flachssaat bekannt, bei dem die Saatkapseln zunächst schonend aufgebrochen werden, dergestalt daß die Öl enthaltenden Saatkörner nicht beschädigt werden. Das in ihnen enthaltene Öl wird dann in der Gasphase mit Flüssiggas bei 5° C extrahiert, so daß das Öl nicht mit den in der Kapsel enthaltenen Enzymen in Berührung kommt. Das Verfahren ist im Verhältnis zu herkömmlichen Methoden der Lebensmittelraffination jedoch aufwendig und teuer und folglich unwirtschaftlich für die meisten potentiellen Verwendungszwecke des damit hergestellten Öls.

In der GB 2371545 wird ein Verfahren zur Gewinnung von nur in geringen Mengen vorkommenden Substanzen aus den Ölen, z.B. Palmöl beschrieben. Dabei werden die Substanzen mittels Alkoholextraktion aus den Rohölen isoliert. Es wird nicht erwähnt, dass eine derartige Alkoholextraktion zur Aufbereitung von Rohölen in genießbare und lagerfähige Öle geeignet ist.

Die US 4,486,353 betrifft ein Verfahren zur Gewinnung von Pflanzenölen aus ölhaltigen Ausgangsmaterialien mittels einer alkoholischen Extraktion. Auch hier wird nicht erwähnt, dass eine Alkoholextraktion zur Aufbereitung von Rohölen in genießbare und lagerfähige Öle geeignet ist.

Aufgabe der Erfindung ist es, ein wirtschaftliches Verfahren bereitstellen, das die Aufbereitung von toxischen Stoffen enthaltenes Pflanzenölen zu genießbaren, lagerfähigen und ernährungsphysiologisch wertvollen Pflanzenölen ermöglicht. Diese Aufgabe wird mit den Merkmalen des Anspruchs 1 gelöst.

Erfindungsgemäß ist demnach die Verwendung ein Verfahrens zur Aufbereitung von toxische Stoffen enthaltenden Pflanzenölen zu genießbaren, Lagerfähigen Pflanzenölen vorgesehen, bei dem das Öl mit einem Alkohol vermischt wird, das erhaltene Gemisch gegebenenfalls filtriert wird und anschließend einer Phasentrennung unterzogen wird, bei der die gebildete alkoholische Fraktion abgeschieden wird. Fakultativ wird das Öl einer Nachwäsche unterzogen und/oder der restliche, im Öl verbliebene Alkohol in einem weiteren Schritt entfernt.

Untersuchungen der Anmelderin haben überraschend gezeigt, daß aus einem glycosidhaltigen Pflanzenöl durch diese Aufbereitung ein geschmacklich angenehmes Speiseöl mit einer guten Lagerfähigkeit gewonnen werden kann, das ohne geschmackliche Beeinträchtigung mit anderen Pflanzenölen mischbar ist. Dabei werden durch das Waschen mit Alkohol im Öl bereits vorhandene freie Fettsäuren und insbesondere Glycoside, die sich aufgrund ihrer Hydrophilie in Alkohol besser lösen als in Öl, aus dem Öl entfernt. Außerdem werden die im Rohöl enthaltenen Enzyme (Glucosidasen, Lipasen, Oxidasen) durch die Einwirkung des Alkohols denaturiert, so daß deren die Glycoside bzw. Fette hydrolysiernde Aktivität unterbunden wird.

Überdies, so haben Untersuchungen der Anmelderin ergeben, bietet die Behandlung eines glycosidhaltigen Pflanzenöls nach dem erfindungsgemäßen Verfahren eine Reihe weiterer Vorteile. So kann durch die Denaturierung von im Öl enthaltenen Proteinen eine schnelle, saubere Ölentschleimung erreicht werden. Überdies können im Öl enthaltene Schwermetalle (z.B. Fe, Mn, Cu), die ebenfalls überwiegend an Glycoside gebunden in Ölsaaten vorkommen und als Katalysator den Verderb des Öls beschleunigen, weitgehend aus dem Öl entfernt werden. Ferner führt die Denaturierung der im Öl enthaltenen Proteine zu einer Verminderung des allergenen Potentials.

Aus der DE 69617219 ist bekannt, Lignane und Glykoside aus Leinsamenmehl mittels Ethanol zu extrahieren. Die so gewonnenen Lignane bzw. Glykoside sollen z.B. zu Pharmazeutika weiterverarbeitet werden, die Reinigung des Leinsamenmehls steht nicht im Vordergrund. Insbesondere ergibt sich aus der DE 69617219 nicht, dass mittels Ethanol-Extraktion eine vollständige Entfernung der genannten Stoffe möglich ist, die Voraussetzung für die verbesserten Eigenschaften der erfindungsgemäß angesprochenen Öle ist.

In einer weiteren vorteilhaften Ausgestaltung des Verfahrens wird das Öl gegebenenfalls filtriert und dann einer Phasentrennung unterzogen, bei der die gebildete alkoholische Fraktion abgeschieden wird. Fakultativ wird das Öl einer Nachwäsche unterzogen und/oder der restliche, im Öl verbliebene Alkohol in einem weiteren Schritt entfernt. Durch diese Schritte werden, wie zuoberst beschrieben, im Öl vorhandene freie Fettsäuren und von toxischen Stoffe aus dem Öl entfernt.

In einer besonders bevorzugten Ausgestaltung des Verfahrens wird das Öl gegebenenfalls filtriert und dann einem Aufbereitungsverfahren gemäß Anspruch 1 unterzogen, d.h. das Öl, das bereits einen Alkoholanteil enthält, wird zusätzlich mit weiterem Alkohol vermischt und dann den zuoberst beschriebenen Trennungs- und Reinigungsschritten unterworfen. Durch diese Schritte werden im Öl vorhandene freie Fettsäuren und Glycoside noch gründlicher aus dem Öl entfernt als es mit einem Verfahren möglich ist, bei dem das Öl lediglich einer Phasentrennung und einer Nachwäsche unterworfen wird.

In einer bevorzugten Ausgestaltung des beschriebenen Verfahrens erfolgt die Nachwäsche des gemäß der Erfindung aufbereiteten Öls im Gegenstrom mit Alkohol. Alternativ kann vorgesehen sein, daß die Nachwäsche des Öls durch wiederholte Vermischung und Phasentrennung mit Alkohol erfolgt.

In einer weiteren bevorzugten Ausgestaltung des beschriebenen Verfahrens wird der restliche, im Öl verbliebene Alkohol durch Vakuumdestillation entfernt. Alternativ kann vorgesehen sein, daß der restliche, im Öl verbliebene Alkohol durch Auswaschen mit Wasser entfernt und anschließend das verbliebene Wasser durch Vakuumdestillation entfernt wird.

.

In einer bevorzugten Ausgestaltung des beschriebenen Verfahrens ist vorgesehen, daß das Gewichtsverhältnis zwischen Öl und Alkohol für die Gesamtwäsche zwischen 1 : 0.3 und 1 : 2 beträgt. Besonders bevorzugte Gewichtsverhältnisse liegen zwischen 1 : 0.5 und 1 : 1. Bei diesen Gewichtsverhältnissen stellen sich optimale Ergebnisse in Bezug auf die Effizienz und die Wirtschaftlichkeit der Glykosidextraktion aus dem Öl.

In einer weiteren bevorzugten Ausgestaltung des beschriebenen Verfahrens ist vorgesehen, daß das Gemisch aus Öl und Alkohol bei einer Temperatur von 15 - 40°C verrührt wird. In einer weiteren bevorzugten Ausgestaltung des Verfahrens ist vorgesehen, daß die Phasentrennung bei einer Temperatur von über 15 °C durchgeführt wird. Besonders bevorzugt wird die Phasentrennung bei ca. 35° C durchgeführt. Bei diesen Temperaturen stellen sich optimale Ergebnisse in Bezug auf die Mischeffizienz bzw. die Güte und Trennschnelligkeit der Phasentrennung ein.

In einer vorteilhaften Ausgestaltung des beschriebenen Verfahrens wird als Alkohol ein wasserlöslicher Alkohol verwendet. Besonders vorteilhaft wird Ethanol verwendet, und zwar bevorzugt mit einer Konzentration zwischen 50 und 96 %. Besonders bevorzugt wird Ethanol mit einer Konzentration zwischen 80 und 96 % verwendet.

In einer weiteren vorteilhaften Ausgestaltung des beschriebenen Verfahrens wird als Pflanzenöl Flachsöl verwendet, das sich einerseits durch eine gesundheitlich hochwertige Fettsäurezusammensetzung auszeichnet, andererseits aber einen hohen Anteil an potentiell toxischen Glycosiden aufweist. Gleichwohl kann jedes andere, Glycoside enthaltende Pflanzenöl verwendet werden.

Ein gemäß dem beschriebenen Verfahren gewonnenes Öl kann als Speiseöl, als Beimischung zu anderen Speiseölen, als Zutat für die Herstellung von Lebensmitteln oder Nahrungsergänzungsmitteln oder für diätetische oder pharmazeutische Zwecke verwendet werden. Ebenso können die gewonnenen glycosidischen Stoffe für pharmazeutische Zwekke oder für den Pflanzenschutz, die gewonnenen Lignane für diätetische oder pharmazeutische Zwecke, und die gewonnenen Lezithine für diätetische oder pharmazeutische Zwecke verwendet werden.

Im folgenden wird ein Beispiel für die Durchführung des erfindungsgemäßen Verfahrens dargestellt.

### Beispiel : Verfahren zur Aufbereitung eines glycosidhaltigen Pflanzenöls

a) Das frischgepresste, noch trübe Öl wird mit 30 - 50 Gew.-% 80 - 96%igem Ethanol bei einer Temperatur von 20 - 35°C verrührt und dann unmittelbar blank filtriert. Dieser letzte Schritt kann ausgelassen werden, wenn ein bereits klarfiltriertes Öl verwendet wird.
b) Das erhaltene Gemisch wird bei einer Temperatur von über 20°C stehen gelassen, so daß sich das Ethanol absetzen kann.
c) Abscheiden der sich oberhalb des Öles absetzenden klaren Ethanolschicht
d) Das erhaltene Öl wird nun mindestens einmal (ggfls. mehrfach) mit 30 - 40 Gew.-% 80 - 96%igem Ethanol gewaschen. Zwischendurch wird die sich oberhalb des Öles absetzende klaren Ethanolschicht abgeschieden.
e) Entfernen des restlichen im Öl gelösten Ethanols durch Auswaschen mit entmineralisiertem Wasser bei einem Verhältnis von Öl zu Wasser von 1 : 5 und anschließender Entfernung des im Öl gelösten Restwassers durch Hochvakuumdestillation im Dünnschichtverfahren bei einer Temperatur von maximal unter 50°C.
f) Rückgewinnung des Ethanols aus dem Waschethanol und Abscheiden des Glykosidkonzentrates mit den Inhaltsstoffen Lignan und Lezithin zur Weiterverarbeitung.

## Patentansprüche

1. Verwendung eines Verfahrens mit den folgenden Schritten (a-e) zur Aufbereitung von gesundheitlich bedenkliche Stoffe enthaltenden Pflanzenölen zu genießbaren, lagerFähigen Pflanzenölen:
a) das Öl wird mit einem Alkohol vermischt,
b) das erhaltene Gemisch wird gegebenenfalls filtriert,
c) das Gemisch wird einer Phasentrennung unterzogen, bei der die gebildete alkoholische Fraktion abgeschieden wird,
d) das Öl wird gegebenenfalls einer oder mehrerer Nachwäschen mit anschließender Phasentrennungunterzogen, und
e) der restliche, im Öl verbliebene Alkohol wird gegebenenfalls nach bekannten Methoden entfernt.

2. Verwendung nach Anspruch 1, **dadurch gekennzeichnet, daß** die Nachwäsche des Öls im Gegenstrom mit Alkohol erfolgt.

3. Verwendung nach einem der vorherigen Ansprüche, **dadurch gekennzeichnet, daß** der restliche, im Öl verbliebene Alkohol durch Vakuumdestillation entfernt wird.

4. Verwendung nach einem der vorherigen Ansprüche, **dadurch gekennzeichnet, daß** das Gemisch aus Alkohol und Öl bei einer Temperatur von 15 - 40°C bearbeitet wird.

5. Verwendung nach einem der vorherigen Ansprüche, **dadurch gekennzeichnet, daß** als Alkohol ein wasserlöslicher Alkohol, insbesondere Ethanol in einer Konzentration zwischen 50% und 96% verwendet wird.

6. Verwendung nach einem der vorherigen Ansprüche, **dadurch gekennzeichnet, daß** als Pflanzenöl Flachsöl oder Perillaöl verwendet wird.

## Claims

1. Use of a method comprising the following steps (a-e) for processing vegetable oils containing substances harmful to health to get edible and storable vegetable oils:
a) the oil is mixed with an alcohol,
b) optionally the obtained mixture is filtered,
c) the mixture is subjected to a phase separation, during which the formed alcoholic fraction is separated,
d) optionally the oil is subjected to one or several re-washing steps with subsequent phase separation, and
e) optionally the remaining alcohol in the oil is removed with known methods.

2. Use according to claim 1, **characterised in, that** the re-washing of the oil is done in counter flow with alcohol.

3. Use according to one of the proceeding claims, **characterised in, that** the remaining alcohol in the oil is removed by vacuum distillation.

4. Use according to one of the proceeding claims, **characterised in, that** the mixture of alcohol and oil is processed at a temperature of 15-40°C.

5. Use according to one of the proceeding claims, **characterised in, that** the alcohol used is a water soluble alcohol, especially ethanol in a concentration between 50% and 96%.

6. Use according to one of the proceeding claims, **characterised in, that** flax-oil or perilla-oil is used as vegetable oil.

## Revendications

1. Application d'un procédé comportant les étapes (a - e) suivantes de traitement d'huiles végétales contenant des substances préoccupantes en vue d'obtenir des huiles végétales comestibles stockables :
a) l'huile est mélangée avec un alcool,
b) le mélange obtenu est filtré s'il y a lieu,
c) le mélange est soumis à une séparation des phases pour séparer la fraction alcoolique qui s'est formée,
d) après ce traitement, l'huile est soumise, s'il y a lieu, à un ou plusieurs lavages suivis d'une séparation des phases et
e) l'alcool résiduel encore contenu dans l'huile est, s'il y a lieu, éliminé par des méthodes connues.

2. Application selon la revendication 1, **caractérisée en ce que** le lavage après traitement de l'huile à lieu à contre courant avec de l'alcool.

3. Application selon l'une des revendications précédentes, **caractérisée en ce que** l'alcool résiduel encore contenu dans l'huile est éliminé par distillation sous vide.

4. Application selon l'une des revendications précédentes, **caractérisée en ce que** le mélange d'alcool et d'huile est traité à une température de 15 à 40°C.

5. Application selon l'une des revendications précédentes, **caractérisée en ce que** l'alcool utilisé est un alcool hydrosoluble, notamment de l'éthanol à une concentration comprise entre 50 et 96 %.

6. Application selon l'une des revendications précédentes, **caractérisée en ce que** l'huile végétale utilisée est de l'huile de lin ou de l'huile de périlla.
